# EUROPEAN PATENT APPLICATION

(11) **EP 4 804 685 A1**
(43) Date of publication of application: **09.09.2026**
(21) Application number: 23957701.8
(22) Date of filing: 02.11.2023
(51) Int. Cl.: H04W 72/21, H04W 8/24, H04W 72/231

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/039662
(87) International publication number: WO 2025/094375

(57) **Abstract**

A terminal according to one aspect of the present disclosure includes: a transmitting section that transmits capability information indicating a support for a second feature group with a support for a first feature group for an SRS using more than four transmission ports as a prerequisite; a receiving section that receives a configuration of the SRS; and a control section that controls a transmission of the SRS, based on the configuration.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In 3GPP Rel. 15/16, the maximum number of UL layers is four, and the maximum number of sounding reference signal (SRS) ports is also four. Therefore, a UL transmission is realized based on a simple relation between a layer and a port of an uplink (UL) channel/signal (PUSCH/SRS).

For future radio communication systems (for example, 3GPP Rel. 18 and later versions), more than four layers are under study to be supported for the UL transmission from a terminal (a user terminal or User Equipment (UE)). However, an operation in a case in which the SRS ports with a number more than four ports are supported is not clear. This may prevent a transmission of the SRS using the SRS ports with a number more than four from being properly performed.

One of the objectives of the present disclosure is therefore to provide a terminal, a radio communication method and a base station that can properly perform the transmission of the SRS using the SRS ports with a number more than four.

### Solution to Problem

A terminal according to one aspect of the present disclosure includes: a transmitting section that transmits capability information indicating a support for a second feature group with a support for a first feature group for an SRS using more than four transmission ports as a prerequisite; a receiving section that receives a configuration of the SRS; and a control section that controls a transmission of the SRS, based on the configuration. Advantageous Effects of Invention

According to one aspect of the present disclosure, the transmission of the SRS using the SRS ports with a number more than four can be properly performed.

### Brief Description of Drawings

[FIG. 1] FIG. 1 shows an example of an SRS resource set configuration information element.
[FIG. 2] FIG. 2 shows an example of an SRS resource configuration information element.
[FIG. 3] FIG. 3 shows an example of a port distribution with a TDM applied.
[FIG. 4] FIG. 4 shows an example of items of a definition of an FG.
[FIG. 5] FIG. 5 is a diagram to show an example of a schematic configuration of a radio communication system according to one embodiment.
[FIG. 6] FIG. 6 is a diagram to show an example of a configuration of a base station according to one embodiment.
[FIG. 7] FIG. 7 is a diagram to show an example of a configuration of a user terminal according to one embodiment.
[FIG. 8] FIG. 8 is a diagram to show an example of a hardware configuration of the base station and the user terminal according to one embodiment.
[FIG. 9] FIG. 9 is a diagram to show an example of a vehicle according to one embodiment.

### Description of Embodiments

### (Control of a transmission of an SRS and a PUSCH)

In Rel-15 NR, a terminal (a user terminal or User Equipment (UE)) may receive information to be used for a transmission of a reference signal for a measurement (for example, a sounding reference signal (SRS)) (SRS configuration information, for example, a parameter in an "SRS-Config" of an RRC control element).

Specifically, the UE may receive at least one of the information regarding one or more SRS resource sets (SRS resource set information, for example, an "SRS-ResourceSet" of the RRC control element) and the information regarding one or more SRS resources (SRS resource information, for example, an "SRS-Resource" of the RRC control element).

One SRS resource set may be associated with a given number of SRS resources (a given number of SRS resources may be grouped together). Each of the SRS resources may be specified by an SRS resource indicator (SRI) or an SRS resource ID (identifier).

The SRS resource set information may include the information on an SRS resource set ID (SRS-ResourceSetId), a list of the SRS resource IDs (SRS-ResourceIds) to be used in such a resource set, an SRS resource type or a usage of the SRS.

Here, the SRS resource type may indicate a periodic SRS (P-SRS), a semi-persistent SRS (SP-SRS) or aperiodic CSI (aperiodic SRS (A-SRS)). Note that the UE may periodically transmit the P-SRS and the SP-SRS (or periodically after activation) and may transmit the A-SRS based on an SRS request of DCI.

The usage (an RRC parameter, "usage," or an L1 (Layer-1) parameter, "SRS-SetUse") may be, for example, beam management (beamManagement (BM)), a codebook (CB), a non-codebook (nonCodebook (NCB)), an antenna switching (AS), or the like. The SRS for a codebook or non-codebook usage may be used for a decision of a precoder of a codebook-based or non-codebook-based uplink shared channel (a Physical Uplink Shared Channel (PUSCH)) transmission based on the SRI.

For example, the UE, in a case of a codebook-based transmission, may decide the precoder (a precoding matrix) for a PUSCH transmission based on the SRI, a transmission rank indicator (TRI) and a transmitted precoding matrix indicator (TPMI). The UE, in a case of a non-codebook-based transmission, may decide the precoder for the PUSCH transmission based on the SRI.

The SRS resource information may include the SRS resource ID (SRS-ResourceId), the number of SRS ports, an SRS port no., a transmission Comb, an SRS resource mapping (for example, a time and/or frequency resource position, a resource offset, a period of a resource, the number of repetitions, the number of SRS symbols, an SRS bandwidth, or the like), hopping relation information, the SRS resource type, a series ID, spatial relation information of the SRS, or the like.

The spatial relation information of the SRS (for example, a "spatialRelationInfo" of an RRC information element) may indicate the spatial relation information between a given reference signal and the SRS. Such a given reference signal may be at least one of a synchronization signal/broadcast channel (Synchronization Signal/Physical Broadcast Channel (SS/PBCH)) block, a channel state information reference signal (CSI-RS) and the SRS (for example, another SRS). The SS/PBCH block may be referred to as a synchronization signal block (SSB).

The spatial relation information of the SRS may include at least one of an SSB index, a CSI-RS resource ID and the SRS resource ID as an index of the given reference signal described above.

Note that in the present disclosure, SSB Index, SSB resource ID and SSB Resource Indicator (SSBRI) may be read interchangeably with one another. CSI-RS index, CSI-RS resource ID and CSI-RS Resource Indicator (CRI) may also be read interchangeably with one another. SRS index, SRS resource ID and SRI may also be read interchangeably with one another.

The spatial relation information of the SRS may include a serving cell index, a BWP index (BWP ID), or the like that corresponds to the given reference signal described above.

The UE, for a given SRS resource, in a case in which the spatial relation information regarding the SSB or the CSI-RS and the SRS is configured, may transmit such an SRS resource using the same spatial domain filter (a spatial domain transmission filter) as the spatial domain filter (a spatial domain reception filter) for a reception of such an SSB or CSI-RS. In this case, the UE may assume that a UE reception beam of the SSB or the CSI-RS and the UE transmission beam of the SRS are the same.

The UE, for a given SRS (a target SRS) resource, in a case in which the spatial relation information regarding another SRS (a reference SRS) and such an SRS (the target SRS) is configured, may transmit the target SRS resource using the same spatial domain filter (the spatial domain transmission filter) as the spatial domain filter (the spatial domain transmission filter) for the transmission of such a reference SRS. In other words, in this case, the UE may assume that the UE transmission beam of the reference SRS and the UE transmission beam of the target SRS are the same.

The UE may decide a spatial relation of the PUSCH to be scheduled by such DCI based on a value of a given field (for example, an SRS resource indicator (SRI) field) in the DCI (for example, DCI format 0_1). Specifically, the UE may use the spatial relation information of the SRS resource to be decided based on the value of such a given field (for example, the SRI) (for example, the "spatialRelationInfo" of the RRC information element) for the PUSCH transmission.

In Rel-15/16 NR, for the PUSCH, in a case in which the codebook-based transmission is used, the UE may be configured with the SRS resource set with the usage of the codebook including up to two SRS resources by the RRC and may be indicated with one of such up to two SRS resources by the DCI (a 1-bit SRI field). The transmission beam of the PUSCH will be indicated by the SRI field.

The UE may determine the TPMI and the number of layers (a transmission rank) for the PUSCH based on precoding information and a number of layers field (hereinafter also referred to as a precoding information field). The UE may select the precoder from the codebook for an uplink with respect to the same number of ports as the number of SRS ports indicated by a higher layer parameter, "nrofSRS-Ports," that is configured for the SRS resource indicated by the SRI field described above, based on the TPMI, the number of layers described above, or the like.

In Rel-15/16 NR, for the PUSCH, in a case in which the non-codebook-based transmission is used, the UE may be configured with the SRS resource set with the usage of the non-codebook including up to four SRS resources by the RRC and may be indicated with one or more of such up to four SRS resources by the DCI (a 2-bit SRI field).

The UE may decide the number of layers (the transmission rank) for the PUSCH based on the SRI field described above. For example, the UE may determine that the number of SRS resources indicated by the SRI field described above and the number of layers for the PUSCH are the same. The UE may also calculate the precoder of the SRS resource described above.

In a case in which the CSI-RS associated with such an SRS resource (or the SRS resource set to which such an SRS resource belongs), which may be referred to as an associated CSI-RS, is configured in the higher layer, the transmission beam of the PUSCH may be calculated based on (the measurement of) such an CSI-RS associated therewith that is configured. Otherwise, the transmission beam of the PUSCH may be indicated by the SRI.

Note that the UE may be configured whether to use a codebook-based PUSCH transmission or a non-codebook-based PUSCH transmission by a higher layer parameter, "txConfig," which indicates a transmission scheme. Such a parameter may indicate the value of the "codebook" or the "non-codebook (nonCodebook)."

In the present disclosure, a codebook-based PUSCH (the codebook-based PUSCH transmission or the codebook-based transmission) may mean the PUSCH in a case in which the UE is configured with the "codebook" as the transmission scheme. In the present disclosure, a non-codebook-based PUSCH (the non-codebook-based PUSCH transmission or the non-codebook-based transmission) may mean the PUSCH in a case in which the UE is configured with the "non-codebook" as the transmission scheme.

### (Transmission of more than four antenna ports)

In Rel-15/16 NR, an uplink (UL) Multi Input Multi Output (MIMO) transmission with up to four layers is supported. For future radio communication systems, a UL transmission with a number of layers larger than four is under study to be supported to realize a higher spectrum efficiency. For example, for Rel-18 NR, a transmission with up to six ranks using six antenna ports, a transmission with up to six or eight ranks using eight antenna ports, and the like are under study.

The precoding matrix with respect to the UL transmission using more than four antenna ports (the antenna ports with a number more than four) is also under study. For example, the codebook for an eight-port transmission, which may be referred to as an eight transmission UL codebook (8 Transmission (TX) UL codebook) or the like, is under study.

In an antenna layout, an Ng is the number of antenna groups. An M is the number of antennas (or antenna elements) of a first dimension, and an N is the number of antennas (or antenna elements) of a second dimension. The first dimension and the second dimension are, for example, a horizontal direction and a vertical direction. A P is the number of planes of polarization. P = 2 means a cross-polarization antenna.

The antenna group may be referred to as a coherent group. The coherent group may include one or more coherent ports. For example, partial coherent UE may include a plurality of coherent groups. The antenna ports in the coherent group may be mutually coherent. The antenna ports in different coherent groups may not be mutually coherent.

The coherent groups may each correspond to different transmit panels/transmission chains (Tx chains)/SRS resource sets/RS resource sets/spatial relation information (spatial relation info)/joint Transmission Configuration Indication states (joint TCI states)/UL TCI states/reception TRPs. Here, the SRS resource set may particularly correspond to the SRS resource set with the usage of the codebook or the non-codebook. The coherent groups may each correspond to different reception TRPs. The coherent group may be referred to as a coherent antenna group, a port group, an antenna set, or the like.

The UE may report the antenna group/antenna deployment information/a coherence number it supports as UE capability information. The UE may be configured with the coherent group (for example, the number of coherent groups or the number of ports included in each of the coherent groups) by a higher layer signaling.

The number of panels on which the antennas are deployed, a direction of the panel, coherency of each panel/antenna (full coherent, partial coherent, non coherent, or the like), an antenna arrangement in a specific direction (horizontal, vertical, or the like) and a polarization antenna configuration (single polarization, cross-polarization, the number of planes of polarization, or the like) may be different from an existing antenna layout. A dG-H and a dG-V represent a horizontal distance and a vertical distance between centers of adjacent antenna groups, respectively.

While the transmission of one codeword (CW) for one PUSCH is supported in Rel-15/16 NR, the UE is under study to transmit more than one CW on one PUSCH for Rel-18 NR. For example, a 2CW transmission for ranks 5 through 8, the 2CW (a dual CW) transmission for ranks 2 through 8, and the like are under study to be supported. One transport block (TB) corresponds to one CW.

In Rel-17 NR and earlier versions, the transmission of two TBs (for example, TB #1 and TB #2) is supported for a DL transmission (for example, a PDSCH transmission). In a case in which two TBs (for example, TB #2) are supported, each of a given field for TB #1 and a given field for TB #2 may be included in the DCI by the DCI to be used for a schedule of a PDSCH (for example, DCI format 1_1). The given field may be, for example, at least one of a modulation/coding method (Modulation and coding scheme), a new data indicator and a redundancy version.

In the PUSCH transmission, the fact that the dual CW is supported (or enabled) may be notified to the UE from the base station by a given higher layer parameter. The given higher layer parameter may be the higher layer parameter regarding the maximum number of CWs to be scheduled by the DCI (for example, a maxNrofCodeWordsScheduledByDCI). The given higher layer parameter (for example, the maxNrofCodeWordsScheduledByDCI) may be included in PUSCH configuration information (for example, a PUSCH-config).

For example, in a case in which it is configured to be 2 by the given higher layer parameter (for example, the maxNrofCodeWordsScheduledByDCI equals 2), it may mean that the given field for TB #2 is included in such DCI. In other words, for the PDSCH, in a case in which the given higher layer parameter indicates a given value (for example, 2), it may mean that the field for TB #2 exists (or that the two codeword transmission is enabled).

In a case in which the given higher layer parameter (for example, the maxNrofCodeWordsScheduledByDCI) indicates that the two codeword transmission (for example, the two codeword transmission) is enabled, one of the two transport blocks may be disabled by a DCI format when a given condition is satisfied. For example, the given condition may be that each of an MCS index (for example, an I_{MCS}) and an RV index is to be a given value (for example, I_{MCS} = 26 and RV = 1) for the transport block corresponding thereto.

In this way, in a case in which the given higher layer parameter is configured to be a given value (for example, maxNrofCodeWordsScheduledByDCI = 2) and the TB with I_{MCS} = 26 and RV = 1 exists, a dynamic indication (or switching) between a case with more than four layers and a case with less than four layers for the PDSCH may be realized by disabling the TB corresponding thereto.

In the present disclosure, a first TB among the two TBs and TB1 may be read interchangeably with each other. In the present disclosure, a second TB among the two TBs and TB2 may be read interchangeably with each other.

For an NCB-based 8Tx PUSCH transmission using N_{SRS} > 4, a method based on an existing specification is under study to be supported. Here, the N_{SRS} is the number of single-port SRS resources that are configured in the SRS resource set. The method enhances an existing SRI indication table to include N_{SRS} = 8 and Lₘₐₓ = 8. Here, the Lₘₐₓ is the maximum number of MIMO layers. An SRI indication for an NCB-based PUSCH may be selected from a bitmap indication and a method based on the existing specification.

To configure the PUSCH transmission by 8Tx UE, the maximum number of MIMO layers is under study to be RRC configured by enhancing the range of a maxRank and a maxMIMO-Layers up to eight. The maximum rank is to be configured by an RRC signaling.

To support a dual CW PUSCH transmission for more than four ranks by the 8Tx UE, a second MCS field (5 bits) is under study to be indicated for a second CW for an MCS indication. To support the dual CW PUSCH transmission for more than four ranks by the 8Tx UE, a second set of fields of a new data indicator (NDI, 1 bit) and the redundancy version (RV, 2 bits) is under study to be indicated. In other words, an additional MCS/NDI/RV for the second CW is to be supported.

### (SRS)

In NR, the reference signal for the measurement (the Sounding Reference Signal (SRS)) has a wide range of applications. The SRS in NR is used not only for a CSI measurement of the uplink (UL), which was also used in existing LTE (LTE Rel. 8 through 14) but also for the CSI measurement of a downlink (DL), the beam management, and the like.

The UE may be configured with one or more SRS resources. The SRS resource may be specified by an SRS resource index (SRI).

Each of the SRS resources may include one or more SRS ports (or may correspond to one or more SRS ports). For example, the number of ports for each SRS may be one, two, four, or the like.

The UE may be configured with one or more SRS resource sets. One SRS resource set may be associated with a given number of SRS resources. The UE may use the higher layer parameter commonly with respect to the SRS resource included in one SRS resource set. Note that the resource set in the present disclosure may be read interchangeably with a set, a resource group, a group, or the like.

Information regarding the SRS resource or the resource set may be configured in the UE using the higher layer signaling, a physical layer signaling or a combination thereof.

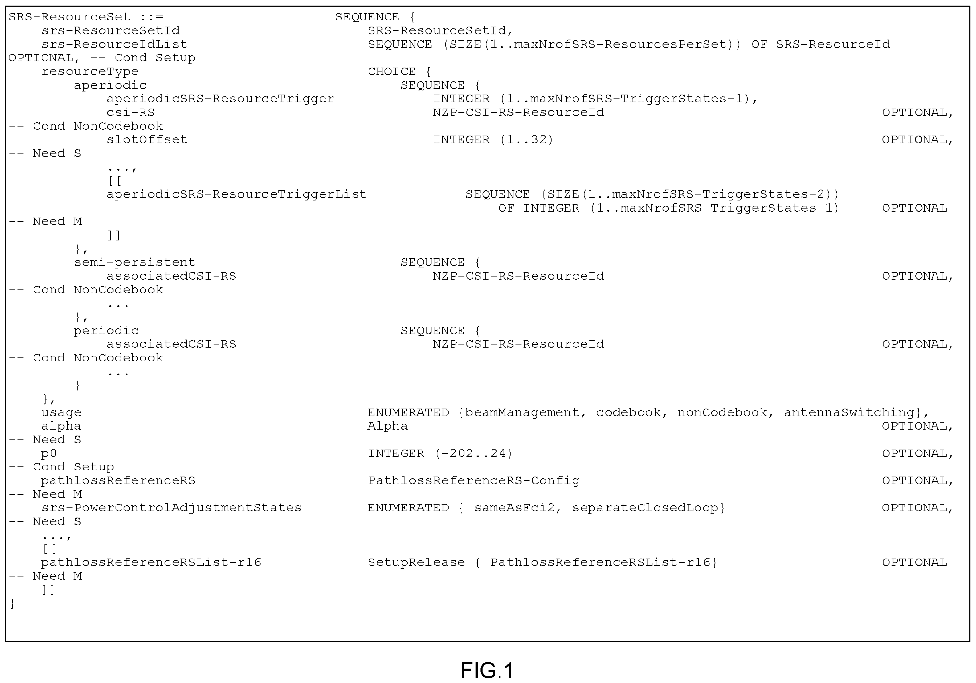

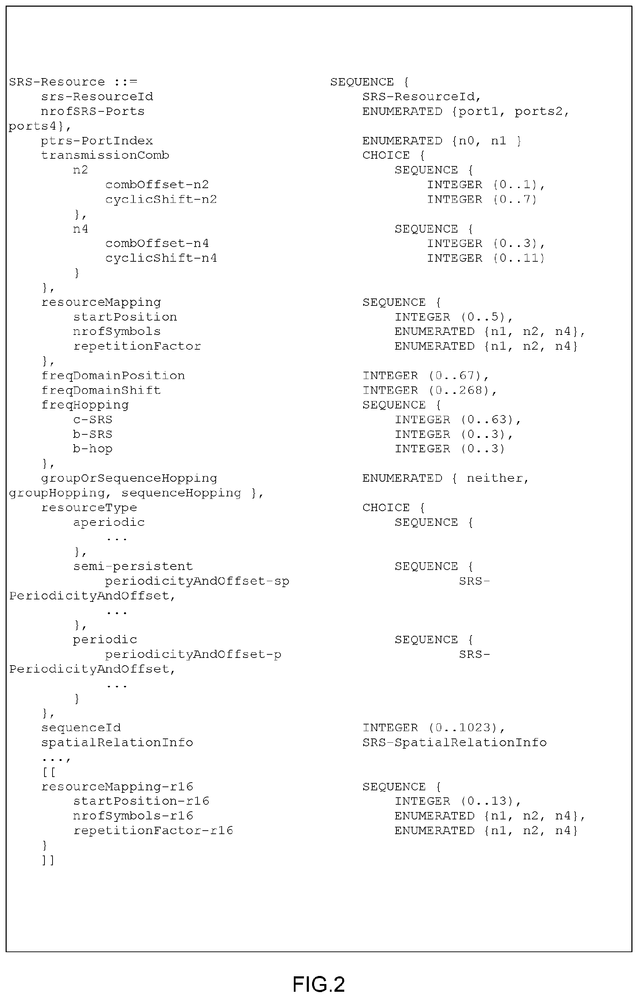

An SRS configuration information element (for example, the "SRS-Config" of the RRC information element) may include an SRS resource set configuration information element (FIG. 1), an SRS resource configuration information element (FIG. 2), or the like.

The SRS resource set configuration information element (for example, the RRC parameter, "SRS-ResourceSet") may include the information of the SRS resource set ID (Identifier) (SRS-ResourceSetId), the list of SRS resource IDs (SRS-ResourceIds) to be used for such a resource set, the SRS resource type (resourceType) or the usage of the SRS.

Here, the SRS resource type may indicate a behavior of a time domain of an SRS resource configuration (the same time domain behavior) or may indicate any of the periodic SRS (Periodic SRS or the P-SRS), the semi-persistent SRS (Semi-Persistent SRS or the SP-SRS) and the aperiodic SRS (Aperiodic SRS, the A-SRS or an AP-SRS). Note that the UE may periodically transmit the P-SRS and the SP-SRS (or periodically after activation). The UE may transmit the A-SRS based on the SRS request of the DCI.

The usage of the SRS (the RRC parameter, "usage," or the L1 (Layer-1) parameter, "SRS-SetUse") may be, for example, the beam management (beamManagement), the codebook (CB), the non-codebook (NCB), the antenna switching (antennaSwitcing), or the like. For example, the SRS for the codebook or non-codebook usage may be used for the decision of the precoder of the codebook-based or non-codebook-based uplink shared channel (Physical Uplink Shared Channel (PUSCH)) transmission based on the SRI.

For the SRS for a beam management usage, only one SRS resource for each SRS resource set may be assumed to be able to be transmitted at a certain time instant (given time instant). Note that in the same Bandwidth Part (BWP), in a case in which a plurality of SRS resources corresponding to the behavior in the same time domain each belong to different SRS resource sets, these SRS resources may be simultaneously transmitted.

The SRS resource configuration information element (for example, the RRC parameter, "SRS-Resource") may include the SRS resource ID (SRS-ResourceId), the number of SRS ports, the SRS port no., the number of transmission combs, the SRS resource mapping (for example, the time and/or frequency resource position, the resource offset, the period of the resource, the number of repetitions, the number of SRS symbols, the SRS bandwidth, or the like), the hopping relation information, the SRS resource type, the series ID, the spatial relation information, or the like.

The value of the number of transmission combs (transmissionComb) is {2, 4}. The value of the number of ports of the SRS (nrofSRS-Ports), Nₐₚ^{SRS}, is {1, 2, 4}. The value of the antenna port no., pᵢ, is {1000, 1001, ...}. The value of the number of consecutive OFDM symbols of the SRS (nrofsymbols), N_{symb}^{SRS}, is {1, 2, 4}. For a start position (startPosition) in the time domain, an offset of a symbol to be counted from the end of a slot in a reverse direction of the time domain, l_{offset}, is {0, 1, ..., 5}, and the start position is given by l₀ = N_{symb}^{slot} - 1 - l_{offset}.

A configuration of the number of transmission combs may include a comb offset and a cyclic shift (CS index or CS no.).

The SRS from the UE with at least one of the comb offset (subcarrier offset) = {0, 1, ... K_{TC}-1} and the CS differing may be multiplexed using the same number of transmission combs, the same RB and the same symbol.

The UE may switch the Bandwidth Parts (BWPs) that transmit the SRS for each slot or may switch the antennas. The UE may apply at least one of an intra-slot hopping and an inter-slot hopping to an SRS transmission.

For an existing SRS, a frequency domain start position for a pᵢ (p_i), k₀^{p_i}, is given by the following Equation (1):${{k}_{0}}^{p_i} = k - 0 p_i + {{\sum }_{b = 0}}^{BSRS} {K}_{TC} ⋅ {{M}_{SC , b}}^{SRS} ⋅ {n}_{b} ,$
where the k⁻ denotes a variable with an overline over the k, which may also be referred to as a k-bar. The k⁻₀^{p_i} may be based on the comb offset, K⁻_{TC}. The K_{TC} is the number of transmission combs. The M_{SC,b}^{SRS} denotes the number of subcarriers to be used for the SRS transmission in the SRS bandwidth, m_{SRS,b} [RB]. The n_{b} is a constant.

### (SRS bandwidth configuration)

In the Rel-16 specification, the SRS bandwidth is specified. C_{SRS} ∈ {0, ..., 63} (a configuration index or a row index) and B_{SRS} ∈ {0, 1, 2, 3} (the number of borders for a bandwidth segmentation) are configured using the higher layer signaling, and the SRS bandwidth is decided using a table specified in the specification (an association/a mapping of the parameters regarding the SRS).

Using the B_{SRS}, an available bandwidth is divided into several segments. A plurality of segments are to be used for an SRS hopping. The C_{SRS} configures the set of SRS bands. The B_{SRS} selects one bandwidth in the set configured. This example shows a case in which C_{SRS} = 13. All candidate values for the SRS bandwidth (the number of RBs), m_{SRS,b}, are multiples of 4. The B_{SRS} divides the available bandwidth into a plurality of segments. The larger the B_{SRS}, the larger the number of frequency segments (the smaller the sizes of the frequency segments).

The parameter, bₕₒₚ ∈ {0, 1, 2, 3}, is configured for an SRS frequency hopping. In a case in which bₕₒₚ < B_{SRS}, the SRS frequency hopping is enabled. The SRS is transmitted using the SRS band from among the bands allocated for the SRS frequency hopping (a hopping band).

In the band allocated for the SRS frequency hopping (the hopping band), the SRS including the SRS band, m_{SRS,b}, is transmitted. For example, in a case in which C_{SRS} = 24, bₕₒₚ = 0, B_{SRS} = 2 and N_{symb}^{SRS} = 4, the m_{SRS,b} is 24 RBs.

### (UE sounding procedure for a DL CSI obtainment)

In Rel-15 NR, as described above, the antenna switching, which may be referred to as an antenna port switching, can be configured as an application of the SRS. An SRS antenna switching may be used when a CSI obtainment (acquisition) of the downlink is performed using the SRS of the uplink in, for example, a time division duplex (TDD) band.

For example, for the UE having a capability of having fewer antenna ports that can be used for the transmission than the number of antenna ports that can be used for the reception, an SRS measurement of the UL may be used for the decision of the precoder of the DL.

Note that the UE may report the UE capability information that indicates an SRS transmission (Tx) port switching pattern it supports (for example, a supportedSRS-TxPortSwitch in the RRC parameter, srs-TxSwitch) to the network. This pattern is expressed in the form of, for example, "txry," such as "t1r2" and "t2r4," which may mean that the SRS transmission can be performed using x antenna ports from among a total of y antennas, which may be denoted as xTyR. Here, the y may correspond to all or a subset of reception antennas of the UE.

Note that in a case in which the x and the y of "txty" are the same value, it may be denoted as xT = xR (for example, 4T = 4R).

For example, the UE with a 2T4R (two transmission ports and four reception ports) may be configured with the SRS resource set that includes two SRS resources each having two ports with the usage of the antenna switching for the DL CSI obtainment.

The UE capability information for an SRS transmission switch (srs-TxSwitch) indicates whether to support the SRS for the DL CSI obtainment (a DL CSI acquisition, a transmission antenna switching or the SRS antenna switching) or not. That UE capability information includes the parameter, supportedSRS-TxPortSwitch. The supportedSRS-TxPortSwitch indicates the SRS Tx port switching pattern to be supported by the UE. The SRS transmission port switching pattern is a mandatory feature involving a capability signaling.

In the present disclosure, SRS Tx port switching pattern and SRS antenna switching configuration may be read interchangeably with each other.

The value of the supportedSRS-TxPortSwitch may indicate 't1r2' for a 1T2R, 't2r4' for the 2T4R, 't1r4' for a 1T4R, 't1r4-t2r4' for the 1T4R/2T4R, 't1r1' for 1T = 1R, 't2r2' for 2T = 2R, 't4r4' for 4T = 4R and 'notSupported' for not supporting.

A UE antenna switching capability indicated as xTyR ('txry') by the supportedSRS-TxPortSwitch corresponds to the UE that can perform the SRS transmission on x antenna ports across a total of y antennas. The y corresponds to all or the subset of UE reception antennas. For example, the 2T4R is two pairs of antennas.

The supportedSRS-TxPortSwitch may report at least one of the following values.
- 't1r2'
- 't1r4'
- 't2r4'
- 't2r2'
- 't4r4'
- 't1r4-t2r4'

The srs-TxSwitch may include a txSwitchImpactToRx or a txSwitchWithAnotherBand. The txSwitchImpactToRx indicates the minimum band entry no. of a UL group that impacts the DL of this band entry (see the txSwitchWithAnotherBand described below). The txSwitchWithAnotherBand indicates the minimum band entry no. of the UL group. That UL group is defined as a band entry involving the ULs that mutually impact each other. In other words, an SRS Tx port switching on any of cells in that group impacts the UL on all cells in that group. In a case in which the UL group includes only one band entry, this parameter does not exist. In the txSwitchImpactToRx and the txSwitchWithAnotherBand, value 1 means a first entry, and value 2 means a second entry. Even in a case in which the supportedSRS-TxPortSwitch is set to the 'notSupported' for the band entry, that UE may include the txSwitchImpactToRx and the txSwitchWithAnotherBand in that band entry. All DLs and ULs that switch together indicate the same entry no. The entry no. is the band entry no. in a band combination. The UE is restricted not to include a fallback-band combination for the purpose of demonstrating different SRS switching capabilities. A band including the UL includes the band associated with a FeatureSetUplinkId that corresponds to a support for an SRS-SwitchingTimeNR and is set to 0.

In a case in which the UE is configured using the SRS resource set (SRS-ResourceSet) and the usage (the higher layer parameter, usage) in that SRS resource set is set to the antenna switching ('antennaSwitching'), the UE does not assume that different spatial relations are configured for the plurality of SRS resources in the same SRS resource set.

In the case in which the UE is configured using the SRS resource set (SRS-ResourceSet) and the usage (the higher layer parameter, usage) in that SRS resource set is set to the antenna switching ('antennaSwitching'), the UE may be configured with one of the following configurations 1 through 5, depending on the UE capability information indicated (or reported) (UE antenna switching capability information or the UE capability information that indicates the SRS transmission port switching pattern (the SRS antenna switching configuration) to be supported by the UE, supportedSRS-TxPortSwitch).

### [Configuration 1]

Up to two SRS resource sets to be configured with different values for a resource type (the higher layer parameter, resourceType) in the SRS resource set for the 1T2R. Each set includes two SRS resources to be transmitted in different symbols, with each SRS resource in a given set being composed of a single SRS port, and the SRS port of a second resource in such a set being associated with a UE antenna port different from the SRS port of a first resource in the same set.

### [Configuration 2]

Up to two SRS resource sets to be configured with different values for the resource type (the higher layer parameter, resourceType) in the SRS resource set for the 2T4R. Each SRS resource set includes two SRS resources to be transmitted in different symbols, with each SRS resource in the given set being composed of two SRS ports, and the SRS port pair of the second resource in such a set being associated with a UE antenna port pair different from the SRS port pair of the first resource in the same set.

### [Configuration 3]

Zero or one SRS resource set to be configured with the resource type (the higher layer parameter, resourceType) in the SRS resource set that includes four SRS resources to be transmitted in different symbols and is set to be periodic or semi-persistent for the 1T4R. Each SRS resource in the given set is composed of a single SRS port, with the SRS port of each resource being associated with a different UE antenna port.

### [Configuration 4]

Zero or two SRS resource sets each to be configured with the resource type (the higher layer parameter, resourceType) in the SRS resource set that includes four SRS resources in total to be transmitted in different symbols of two different slots and is set to be aperiodic for the 1T4R. The SRS ports of each of the SRS resources in given two sets are to be associated with different UE antenna ports. Such two sets each are configured with two SRS resources, or one set is configured with one SRS resource while the other set is configured with three SRS resources. The UE assumes (expects) that both of such two sets are configured with the same value of power control parameters (the higher layer parameters, alpha, p0, pathlossReferenceRS and srs-PowerControlAdjustmentStates) in the SRS resource set. The UE assumes that the values of the parameters (the higher layer parameters, aperiodicSRS-ResourceTrigger and the parameter indicating a code point of an SRS request field in the DCI) in each of the SRS resource sets are the same and that the values of the higher layer parameter, slotOffset, in each of the SRS resource sets are different.

### [Configuration 5]

Up to two SRS resource sets each including one SRS resource for 1T = 1R, 2T = 2R or 4T = 4R. The number of SRS ports for each resource is 1, 2 or 4.

In a case in which the UE is configured with the usage in the SRS resource set to the antenna switching, the UE may be configured with the SRS antenna switching configuration, depending on the UE capability information reported (the supportedSRS-TxPortSwitch or a supportedSRS-TxPortSwitch-v1610).

In a case in which the SRS resource of a given set is transmitted in the same slot as a Y symbol, the UE is configured with a guard period of the Y symbol during which the UE transmits no other symbols. The guard period is between the SRS resources of such a set.

If a UE capability indicated is the 1T4R/2T4R, the UE assumes that the same number of SRS ports, one or two, is to be configured for all SRS resources in the SRS resource set.

If the UE capability indicated is the 1T2R, the 2T4R, the 1T4R or the 1T4R/2T4R, the UE does not assume that more than one SRS resource set with the usage (the higher layer parameter, usage) set to the antenna switching is to be configured or triggered in the same slot. If the UE capability indicated is a 1T1R, a 2T2R or a 4T4R, the UE does not assume that more than one SRS resource set with the usage (the higher layer parameter, usage) set to the antenna switching is to be configured or triggered in the same symbol.

The UE capability information for the SRS transmission switch (srs-TxSwitch-v1610) may include the parameter, supportedSRS-TxPortSwitch-v1610. A reporting of that parameter is optional. The supportedSRS-TxPortSwitch-v1610 indicates a downgrading configuration of the SRS transmission port switching pattern, and its reporting is optional. The UE, in a case in which it indicates the support for the downgrading configuration of the SRS transmission port switching pattern using the supportedSRS-TxPortSwitch-v1610, may report at least one of the following values for indicating the support for the downgrading configuration, based on a content to be reported in the supportedSRS-TxPortSwitch.
- 't1r1-t1r2'
- 't1r1-t1r2-t1r4'
- 't1r1-t1r2-t2r2-t2r4'
- 't1r1-t2r2'
- 't1r1-t2r2-t4r4'
- 't1r1-t1r2-t2r2-t1r4-t2r4'

In the present disclosure, downgrading configuration and SRS Tx port switching pattern using fewer antennas/ports than the total number of antennas/number of all antennas/number of all Rx antennas/maximum number of Rx ports may be read interchangeably with each other.

A Rel-17 UE capability signaling (srs-AntennaSwitchingBeyond4RX-r17) indicates whether the UE supports the SRS antenna switching for more than four Rxs or not. That capability signaling includes the following several parameters.
- supportedSRS-TxPortSwitchBeyond4Rx-r17. This indicates a combination of the xTyRs supported. It is a bitmap with 11 bits. That bitmap starts from a first/the leftmost bit (bit 0). Each bit corresponds to {t1r1, t2r2, t1r2, t4r4, t2r4, t1r4, t2r6, t1r6, t4r8, t2r8, t1r8}. For an arbitrary indication value, the x is equal to or smaller than the value associated with the maximum y.
- entryNumberAffectBeyond4Rx-r17. This indicates the entry no. of the bands listed first involving the UL in the band combination that impacts this DL.
- entryNumberSwitchBeyond4Rx-r17. This indicates the entry no. of the bands listed first involving this UL in the band combination that switches together with the UL.

The UE indicating the support for this capability indicates the support for the srs-TxSwitch.

In a case in which the same value of the xYyR as the value of the xYyR reported using the supportedSRS-TxPortSwitch/supportedSRS-TxPortSwitch-v1610 is reported in the supportedSRS-TxPortSwitchBeyond4Rx-r17, reported values of the entryNumberAffectBeyond4Rx-r17 and the entryNumberSwitchBeyond4Rx-r17 are invalid.

In the present disclosure, SRS transmission port switching pattern and antenna switching SRS configuration may be read interchangeably with each other.

### (Port distribution with a TDM applied)

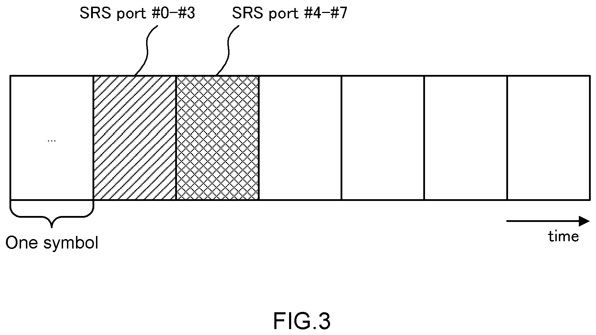

In a case in which the usage of the SRS is the antenna switching/codebook, the measurement of the UL channel with eight ports (eight layers) by the SRS and the mapping of different SRS ports to different OFDM symbols (in other words, the TDM) are under study to be supported (FIG. 3). Alternatively, all eight ports may be mapped to one OFDM symbol.

In a case in which the port distribution with TDM applied (a TDM mapping) is applied, a low number of cyclic shifts occupied by one OFDM symbol provides an effect of high robustness against delay. In addition, power per port can be increased. However, a restriction that a plurality of OFDM symbols use the same frequency resource usage/transmission power may be applied.

For example, as a configuration of the SRS resource, four ports may be assigned per OFDM symbol, and the configuration of an eight-port SRS transmission using two or more OFDM symbols may be performed.

The transmission power associated with an SRS transmission occasion i that corresponds to the SRS transmission configured by the SRS resource is specified in the specification. This SRS transmission means the SRS transmission in one or more OFDM symbols. This transmission power is distributed equally to the antenna ports configured for the SRS (for example, configured by the SRS resource configuration).

### (Feature group for the SRS for the codebook/antenna switching)

The feature group (FG) indicating the features of the UE is defined. A prerequisite FG in a specific feature group is an FG required for a specific FG, and the UE supporting the specific FG supports the prerequisite FG.

In the present disclosure, "type" definition from a UE feature is based on a granularity of one of (1) for each piece of UE, (2) for each band, (3) for each band combination (BC), (4) for each feature set (FS) and (5) for each Feature Set Per Component-carrier (FSPC).

In the Rel-15 UE FG, the following FGs are specified with respect to the SRS for the CB and the AS.
- FG2-58 is defined as follows.

-- Feature: a 2.MIMO.
-- Index: 2-58.
-- FG: a zero slot offset for an AP-SRS transmission in the SRS for a CB PUSCH and the antenna switching on FR1.
-- Component: the support for the zero slot offset between a triggering and the transmission of the AP-SRS in the SRS for the CB PUSCH and the antenna switching on FR1.
-- Prerequisite FG: 2-53 (the SRS resource).
-- Need for a gNB to know if that feature is supported: Yes
-- Mandatory/optional: an optional feature involving the capability signaling.

In the Rel-16 UE FG, the following several FGs are specified with respect to the SRS for the CB/AS.

- FG22-5a is defined as follows.

-- Feature: 22.NR Others.
-- Index: 22-5a.
-- FG: a simultaneous transmission of the SRS for the antenna switching and the SRS for the CB/NCB/BM in an intra-band UL CA.
-- Component:
   --- 1. The support for the transmission of the SRS for the xTyR (x < y) based on the antenna switching and the SRS for the CB/NCB/BM on different CCs in the symbol overlapping it in the intra-band UL CA.
   --- 2. The support for the transmission of the SRS for the xTyR (x = y) based on the antenna switching and the SRS for the CB/NCB/BM on different CCs in the symbol overlapping it in the intra-band UL CA.
   -- Need for the gNB to know if that feature is supported: Yes
   -- Type: for each band.
   -- Mandatory/optional: the optional feature involving the capability signaling. Note: For components 1 and 2, the UE that does not report this component does not support this feature.

- FG22-5b is defined as follows.

-- Feature: the 22.NR Others.
-- Index: 22-5b.
-- FG: the simultaneous transmission of the SRS for the antenna switching and the SRS for the CB/NCB/BM in an inter-band UL CA.
-- Component:
   --- 1. The support for the transmission of the SRS for the xTyR (x < y) based on the antenna switching and the SRS for the CB/NCB/BM on different CCs in the symbol overlapping it in the inter-band UL CA.
   --- 2. The support for the transmission of the SRS for the xTyR (x = y) based on the antenna switching and the SRS for the CB/NCB/BM on different CCs in the symbol overlapping it in the inter-band UL CA.
   -- Need for the gNB to know if that feature is supported: Yes
   -- Type: for each BC.
   -- Mandatory/optional: the optional feature involving the capability signaling. Note: For components 1 and 2, the UE that does not report this component does not support this feature.

- FG22-5c is defined as follows.

-- Feature: the 22.NR Others.
-- Index: 22-5c.
-- FG: the simultaneous transmission of the SRS for the antenna switching and the SRS for the antenna switching in the intra-band UL CA.
-- Component:
   --- 1. The support for the transmission of the SRS for the antenna switching and the SRS for the antenna switching on different CCs in the symbol overlapping it in the intra-band UL CA.
   -- Need for the gNB to know if that feature is supported: Yes
   -- Type: for each band.
   -- Mandatory/optional: the optional feature involving the capability signaling.

- FG22-5d is defined as follows.

-- Feature: the 22.NR Others.
-- Index: 22-5d.
-- FG: the simultaneous transmission of the SRS for the antenna switching and the SRS for the antenna switching in the inter-band UL CA.
-- Component:
   --- 1. The support for the transmission of the SRS for the antenna switching and the SRS for the antenna switching on different CCs in the symbol overlapping it in the inter-band UL CA.
   -- Need for the gNB to know if that feature is supported: Yes
   -- Type: for each BC.
   -- Mandatory/optional: the optional feature involving the capability signaling.

- FG22-8 is defined as follows.

-- Feature: the 22.NR Others.
-- Index: 22-8.
-- FG: the SRS for the CB PUSCH and the antenna switching on FR1 involving a symbol-level offset for the AP-SRS transmission.
-- Component: the need for the offset of 19 symbols at minimum between the triggering and the transmission of the AP-SRS for the UE in the SRS for the CB PUSCH and the antenna switching on FR1.
-- Prerequisite FG: 2-53 (the SRS resource).
-- Need for the gNB to know if that feature is supported: Yes
-- Type: for each FS (can only be applied to FR1).
-- Mandatory/optional: the optional feature involving the capability signaling.

- FG22-8a is defined as follows.

-- Feature: the 22.NR Others.
-- Index: 22-8a.
-- FG: a timeline with constraints for a PDCCH monitoring on an arbitrary span of up to three consecutive OFDM symbols in one slot and the SRS for the CB PUSCH and the antenna switching on FR1.
-- Component:
   --- 1. All search space configurations to be in the same span of the three consecutive OFDM symbols in that slot in given UE.
   --- 2. The need for the offset of 19 symbols at minimum between the triggering and the transmission of the AP-SRS for the UE in the SRS for the CB PUSCH and the antenna switching on FR1.
   -- Prerequisite FG: 2-53 (the SRS resource).
   -- Need for the gNB to know if that feature is supported: Yes
   -- Type: for each FS (can only be applied to FR1).
   -- Mandatory/optional: the optional feature involving the capability signaling.

- FG22-8b is defined as follows.

-- Feature: the 22.NR Others.
-- Index: 22-8b.
-- FG: a monitoring occasion to be able to be an arbitrary OFDM symbol in one slot for case 2 for a type 1 common search space (CSS) involving an individual RRC configuration, a type 3 CSS and a UE-specific search space (UE-SS), and the timeline with constraints for the SRS for the CB PUSCH and the antenna switching on FR1.
-- Component:
   --- 1. The monitoring occasion to be able to be an arbitrary OFDM symbol in one slot for case 2 for the type 1 CSS involving the individual RRC configuration, the type 3 CSS and the UE-SS.
   --- 2. The need for the offset of 19 symbols at minimum between the triggering and the transmission of the AP-SRS for the UE in the SRS for the CB PUSCH and the antenna switching on FR1.
   -- Prerequisite FG: 2-53 (the SRS resource).
   -- Need for the gNB to know if that feature is supported: Yes
   -- Type: for each FS (can only be applied to FR1).
   -- Mandatory/optional: the optional feature involving the capability signaling.

- FG22-8c is defined as follows.

-- Feature: the 22.NR Others.
-- Index: 22-8c.
-- FG: the monitoring occasion to be able to be an arbitrary OFDM symbol in one slot for case 2 involving a DCI gap for the type 1 CSS involving the individual RRC configuration, the type 3 CSS and the UE-SS, and the timeline with constraints for the SRS for the CB PUSCH and the antenna switching on FR1.
-- Component:
   --- 1. The monitoring occasion to include the minimum time interval between two pieces of DL unicast DCI, two pieces of UL unicast DCI, or one piece of DL unicast DCI and one piece of UL unicast DCI in a plurality of monitoring occasions that are different, and to be able to be an arbitrary OFDM symbol in one slot for case 2, for the type 1 CSS involving the individual RRC configuration, the type 3 CSS, and the UE-SS. Here, at least one of those plurality of monitoring occasions that are different is not the monitoring occasion of FG3-1 (a basic DL control channel) for the same UE. That minimum time interval may be as follows.
   ---- Two OFDM symbols for 15 kHz.
   ---- Four OFDM symbols for 30 kHz.
   ---- Seven OFDM symbols for 60 kHz involving a normal cyclic prefix (NCP).
   ---- Eleven OFDM symbols for 120 kHz.
   --- 2. Up to one piece of unicast DL DCI and up to one piece of unicast UL DCI in the monitoring occasion, excluding the monitoring occasion of FG3-1 (the basic DL control channel).
   --- 3. The minimum interval between first two pieces of UL unicast DCI in first three OFDM symbols in one slot, in addition to the TDD, to be able to be a zero OFDM symbol.
   --- 4. The need for the offset of 19 symbols at minimum between the triggering and the transmission of the AP-SRS for the UE in the SRS for the CB PUSCH and the antenna switching on FR1.
   -- Prerequisite FG: 3-5a (the monitoring occasion to be able to be an arbitrary OFDM symbol in one slot for case 2 involving the DCI gap for the type 1 CSS involving the individual RRC configuration, the type 3 CSS and the UE-SS) or 2-53 (the SRS resource).
   -- Need for the gNB to know if that feature is supported: Yes
   -- Type: for each FS (can only be applied to FR1).
   -- Mandatory/optional: the optional feature involving the capability signaling.

In the present disclosure, case 2 may be a case in which an FDD of FR1 is not supported, the TDD of FR1 is not supported, and the TDD of FR2 is not supported.

In the Rel-17 UE FG, the following several FGs are specified with respect to the SRS for the CB/AS.

- FG23-8-3 is defined as follows.

-- Feature: a 23.NR_FeMIMO.
-- Index: 23-8-3.
-- FG: the SRS antenna switching for more than four RXs.
-- Component:
   --- 1. The support for an SRS antenna switching xTyR using y > 4.
   --- 2. The reporting of the entry no. of the bands listed first involving the UL in the band combination that impacts this DL.
   --- 3. The reporting of the entry no. of the bands listed first involving this UL in the band combination that switches together with the UL.
   -- Prerequisite FG: 2-55 (SRS Tx switch).
   -- Need for the gNB to know if that feature is supported: Yes
   -- Consequence if that FG is not supported by the UE: the SRS antenna switching for more than four Rxs is not supported.
   -- Type: for each FS.
   -- Notes:
      --- Candidate value for component 1: one combination from the set {t1r1, t2r2, t1r2, t4r4, t2r4, t1r4, t2r6, t1r6, t4r8, t2r8, t1r8}. The value of the x for an arbitrary value to be displayed is equal to or lower than the value of the x associated with the maximum y.
      --- Candidate value for component 2: {1 through 32}.
      --- Candidate value for component 3: {1 through 32}.
      --- Components 2 and 3 are optional. If components 2 and 3 are reported, the values to be reported for components 2 and 3 are invalid for the same value of the xTyR in component 1 to be reported using a Rel-15/16 UE capability reporting.
      -- Mandatory/optional: the optional feature involving the capability signaling.

- FG23-8-4 is defined as follows.

-- Feature: the 23.NR_FeMIMO.
-- Index: 23-8-4.
-- FG: up to two SP-SRS sets and one P-SRS set for the antenna switching.
-- Component: the support for up to two SP-SRS resource sets and one P-SRS resource set for the antenna switching.
-- Prerequisite FG: 2-53 (the SRS resource).
-- Need for the gNB to know if that feature is supported: Yes
-- Consequence if that FG is not supported by the UE: up to two SP-SRS sets and one P-SRS set for the antenna switching are not supported.
-- Type: for each FS.
-- Notes:
   --- That FG is applied to all xTyRs to be supported with y ≤ 8.
   --- For the xTyR with y > 4, in a case in which the UE does not support this feature, that UE supports one SRS resource set at maximum for the P-SRS and supports one SRS resource set at maximum for the SP-SRS.
   --- For the xTyR with y ≤ 4, in a case in which the UE does not support this feature, that UE is in accordance with Rel. 15 with respect to the number of resource sets for the P-SRS and the SP-SRS.
   --- The two SP-SRS resource sets are not simultaneously activated.
   -- Mandatory/optional: the optional feature involving the capability signaling.

The following four feature groups (FGs) are under study for an eight-port SRS that are TDMed/not TDMed for the codebook (CB)/antenna switching (AS).
- FG40-5-4 may be defined by at least one of the following several items.

-- Feature: 40.NR_MIMO_evo_DL_UL.
-- Index: 40-5-4.
-- FG: the SRS for the antenna switching using 8Tx ports that are not to be TDMed.
-- Component: the support for the SRS for the antenna switching using the 8Tx ports that are not to be TDMed.
-- Need for the gNB to know if that feature is supported: Yes
-- Consequence if that FG is not supported by the UE: the SRS for the antenna switching using the 8Tx ports that are not to be TDMed is not supported.
-- Type: for each band.
-- Mandatory/optional: the optional feature involving the capability signaling.

- FG40-5-4a may be defined by at least one of the following several items.

-- Feature: 40.NR_MIMO_evo_DL_UL.
-- Index: 40-5-4a.
-- FG: the SRS for the codebook using the 8Tx ports that are not to be TDMed.
-- Component: the support for the SRS for the codebook using the 8Tx ports that are not to be TDMed.
-- Need for the gNB to know if that feature is supported: Yes
-- Consequence if that FG is not supported by the UE: the SRS for the codebook using the 8Tx ports that are not to be TDMed is not supported.
-- Type: for each band.
-- Mandatory/optional: the optional feature involving the capability signaling.

- FG40-5-6 may be defined by at least one of the following several items.

-- Feature: 40.NR_MIMO_evo_DL_UL.
-- Index: 40-5-6.
-- FG: the SRS for the antenna switching using the 8Tx ports that are to be TDMed.
-- Component: the support for the SRS for the antenna switching using the 8Tx ports that are to be TDMed.
-- Need for the gNB to know if that feature is supported: Yes
-- Consequence if that FG is not supported by the UE: the SRS for the antenna switching using the 8Tx ports that are to be TDMed is not supported.
-- Type: for each band.
-- Mandatory/optional: the optional feature involving the capability signaling.

- FG40-5-7 may be defined by at least one of the following several items.

-- Feature: 40.NR_MIMO_evo_DL_UL.
-- Index: 40-5-7.
-- FG: the SRS for the codebook using the 8Tx ports that are to be TDMed.
-- Component: the support for the SRS for the codebook using the 8Tx ports that are to be TDMed.
-- Need for the gNB to know if that feature is supported: Yes
-- Consequence if that FG is not supported by the UE: the SRS for the codebook using the 8Tx ports that are to be TDMed is not supported.
-- Type: for each band.
-- Mandatory/optional: the optional feature involving the capability signaling.

In a case in which the eight-port SRS for the CB/AS is supported/reported, it is not clear whether these FGs are applied or a new SF is introduced to the eight-port SRS for the CB/AS. Insufficient study on such matters may lead to a decline in communication quality/a throughput.

Therefore, the inventors of the present invention came up with the idea of a reporting method regarding the feature/capability regarding the SRS with a number more than four.

### (Various Interpretations and Others)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having the capability of ..." may be read interchangeably with "supporting/reporting the capability of ...."

In the present disclosure, ceil(x), ceiling function and ceiling function may be read interchangeably with one another. In the present disclosure, floor(x), floor function and floor function may be read interchangeably with one another. In the present disclosure, sqrt(x) and square root (root) may be read interchangeably with each other. In the present disclosure, x mod y, mod(x, y), mod function and modulo operation may be read interchangeably with one another. In the present disclosure, Σ_{i = M}^{N}f(i), the summation of f(i) over i = M, M+1, ..., N and f(M) + f(M + 1) + ... + f(N) may be read interchangeably with one another. C(x, y) denotes the number of combinations of y chosen from x (a combinatorial coefficient) and is also referred to as a binomial coefficient (binomial coefficients).

In the present disclosure, a_{b}, a_b and a with b written at the lower right of a may be read interchangeably with one another. In the present disclosure, a^{c}, a^c and a with c written at the upper right of a may be read interchangeably with one another. In the present disclosure, a_{b}^{c}, a_b^c and a with b written at the lower right and c at the upper right of a may be read interchangeably with one another. In the present disclosure, x^{~} may be represented by x with ~ at the top of x or may be referred to as an x-tilde. In the present disclosure, x⁻ may be represented by x with - at the top of x or may be referred to as an x-bar.

As the SRS in the present disclosure, at least one of the P-SRS, the SP-SRS and the AP-SRS may be used. In the present disclosure, P SRS and P-SRS may be read interchangeably with each other. In the present disclosure, SP SRS and SP-SRS may be read interchangeably with each other. In the present disclosure, AP SRS and AP-SRS may be read interchangeably with each other. In the present disclosure, resource set group and SRS resource set group may be read interchangeably with each other.

In the present disclosure, x Tx ports and y Rx ports/antennas being used, the xTyR being applied, 'txry' being transmitted (reported) in the UE capability information (for example, the supportedSRS-TxPortSwitch/supportedSRS-TxPortSwitch-v1610/srs-AntennaSwitchingBeyond4RX-r17, or the like) and the xTyR being configured in the higher layer signaling/physical layer signaling may be read interchangeably with one another. In the present disclosure, the UL transmission with a number of layers larger than four may be applied. The process of the present disclosure may be applied to the UE with a number of layers larger than four supported.

In the present disclosure, port, SRS port, transmission port, SRS transmission port, antenna port, UE antenna port, reception port, antenna, UE antenna and reception antenna may be read interchangeably with one another.

In the present disclosure, FG, UE capability, capability information, capability signaling, support for the FG and reporting of the capability may be read interchangeably with one another.

### (Radio communication method)

### <Embodiment 1>

A new FG may be introduced in a UE capability reporting for the SRS using more than four ports (the eight-port SRS or an 8Tx SRS). The new FG may include the component similar to the component of an existing FG and may include a different index.

The new FG for at least one of the following several existing FGs may be introduced.
- FG2-58
- FG22-5a
- FG22-5b
- FG22-5c
- FG22-5d
- FG22-8
- FG22-8a
- FG22-8b
- FG22-8c
- FG23-8-3
- FG23-8-4

The new FG may be in accordance with at least one of the following several options denoted by 1-x.
- Option 1-1: the new FG is applied only to the SRS using more than four ports (or only to the eight-port SRS).
- Option 1-2: the new FG is applied only to a specific xTyR. The specific xTyR may be, for example, an 8T8R.
- Option 1-3: the new FG is applied to both the SRS using four or fewer ports and the SRS using more than four ports. In a case in which the new FG is reported, the existing FG for the same feature as the new FG may be ignored.

In option 1/2, in the new FG, an application condition for the new FG may be explicitly indicated/defined. In a case in which the new FG is in accordance with option 1 or 2, the existing FG may be considered to be applied only to the SRS using four or fewer ports or may be considered to be applied only to an existing xTyR.

The new FG may be in accordance with at least one of the following several options denoted by 2-x.
- Option 2-1: one new FG is introduced for one existing FG. The prerequisite FG for the new FG may include "FG40-5-4, FG40-5-4a, FG40-5-6 or FG40-5-7." That prerequisite FG may include at least one of the "SRS using the 8Tx ports that are not to be TDMed for the AS," the "SRS using the 8Tx ports that are not to be TDMed for the CB," the "SRS using the 8Tx ports that are to be TDMed for the AS" and the "SRS using the 8Tx ports that are to be TDMed for the CB."
- Option 2-2: a plurality of new FGs separated are introduced for one existing FG. The plurality of new FGs separated may be the FG for the eight-port SRS for the CB and the FG for the eight-port SRS for the AS. The prerequisite FG for the new FG may include "FG40-5-4 or FG40-5-6" or "FG40-5-4a or FG40-5-7." For example, the new FG only for the eight-port SRS for the AS may be introduced to FG22-5c, 22-5d, 23-8-3 or 23-8-4. The prerequisite FG of that new FG may include "FG40-5-4 or FG40-5-6."

The new FG may be reported for each band, may be reported for each BC, may be reported for each FS, may be reported for each FSPC or may be reported for each band and each BC. The UE may report the capability information indicating the new FG (the component).

### <<Example of option 1-1>>

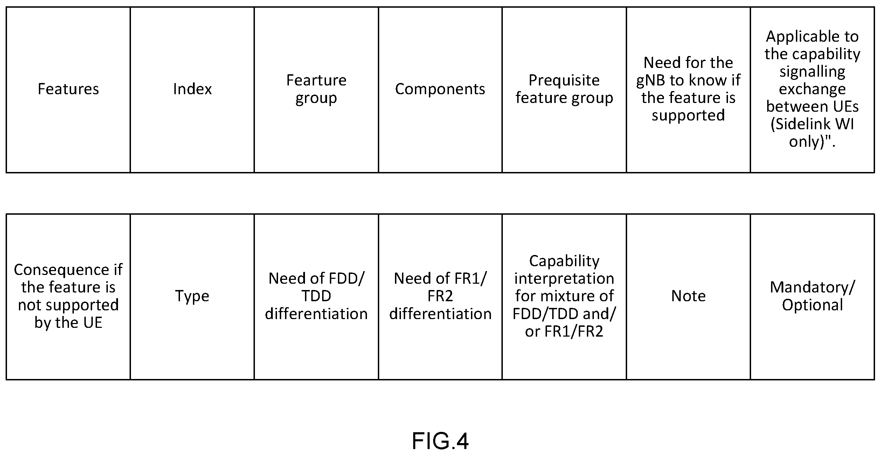

One FG may be defined as a row in the table. The FG may be defined by at least one of the following several items, as shown in FIG. 4.
-- Feature.
-- Index.
-- FG.
-- Component.
-- Prerequisite FG.
-- Need for the gNB to know if that feature is supported.
-- Applicability to a capability signaling exchange between a plurality of UE (only a sidelink study item).
-- Consequence if that FG is not supported by the UE.
-- Type. The "type" definition from the UE feature is based on a granularity of one of (1) for each piece of UE, (2) for each band, (3) for each BC, (4) for each FS and (5) for each FSPC.
-- Need for a differentiation of the FDD/TDD.
-- Need for the differentiation of FR1/FR2.
-- Interpretation of the capability for a mixture of the FDD/TDD and/or FR1/FR2.
-- Notes.
-- Mandatory/optional.

### <<<Example of the new FG for FG2-58>>>

- The new FG for FG2-58 may be defined by at least one of the following several items.

-- Feature: 40.NR_MIMO_evo_DL_UL.
-- Index: 40-5-8.
-- FG: the zero slot offset for the AP-SRS transmission in the eight-port SRS for the CB PUSCH and the antenna switching on FR1.
-- Component: the support for the zero slot offset between the triggering and the transmission of the AP-SRS in the eight-port SRS for the CB PUSCH and the antenna switching on FR1.
-- Prerequisite FG: 40-5-4, 40-5-4a, 40-5-6 or 40-5-7.
-- Need for the gNB to know if that feature is supported: Yes
-- Consequence if that FG is not supported by the UE: the zero slot offset between the triggering and the transmission of the AP-SRS is not supported in the SRS for the CB PUSCH and the antenna switching on FR1.
-- Type: for each band.
-- Mandatory/optional: the optional feature involving the capability signaling.

### <<<Example of the new FG for FG22-5a and 22-5b>>>

In component 1 for each of the following FGs, the xTyR may be explicitly described as having y > 4, or the xTyR may be explicitly described as being one or more of 't2r6, t1r6, t4r6, t4r8, t2r8 and t1r8.' In component 2 for each of the following FGs, the xTyR may be explicitly described as being only 't8r8.'

- The new FG for FG22-5a may be defined by at least one of the following several items.

-- Feature: 40.NR_MIMO_evo_DL_UL.
-- Index: 40-5-9.
-- FG: the simultaneous transmission of the SRS for the antenna switching and the SRS for the CB/NCB/BM in the intra-band UL CA. At least one SRS from among those SRSs uses more than four ports (or eight ports).
-- Component:
   --- 1. The support for the transmission of the SRS for the xTyR (x < y) based on the antenna switching and the SRS for the CB/NCB/BM on different CCs in the symbol overlapping it in the intra-band UL CA.
   --- 2. The support for the transmission of the SRS for the xTyR (x = y) based on the antenna switching and the SRS for the CB/NCB/BM on different CCs in the symbol overlapping it in the intra-band UL CA.
   -- Prerequisite FG: 40-5-4, 40-5-4a, 40-5-6 or 40-5-7.
   -- Need for the gNB to know if that feature is supported: Yes
   -- Type: for each band.
   -- Mandatory/optional: the optional feature involving the capability signaling. Note: For components 1 and 2, the UE that does not report this component does not support this feature.

- The new FG for FG22-5b may be defined by at least one of the following several items.

-- Feature: 40.NR_MIMO_evo_DL_UL.
-- Index: 40-5-10.
-- FG: the simultaneous transmission of the SRS for the antenna switching and the SRS for the CB/NCB/BM in the inter-band UL CA. At least one SRS from among those SRSs uses more than four ports (or eight ports).
-- Component:
   --- 1. The support for the transmission of the SRS for the xTyR (x < y) based on the antenna switching and the SRS for the CB/NCB/BM on different CCs in the symbol overlapping it in the inter-band UL CA.
   --- 2. The support for the transmission of the SRS for the xTyR (x = y) based on the antenna switching and the SRS for the CB/NCB/BM on different CCs in the symbol overlapping it in the inter-band UL CA.
   -- Prerequisite FG: 40-5-4, 40-5-4a, 40-5-6 or 40-5-7.
   -- Need for the gNB to know if that feature is supported: Yes
   -- Type: for each BC.
   -- Mandatory/optional: the optional feature involving the capability signaling. Note: For components 1 and 2, the UE that does not report this component does not support this feature.

### <<<Example of the new FG for FG22-5c and 22-5d>>>

- The new FG for FG22-5c may be defined by at least one of the following several items.

-- Feature: 40.NR_MIMO_evo_DL_UL.
-- Index: 40-5-11.
-- FG: the simultaneous transmission of the SRS for the antenna switching and the SRS for the antenna switching in the intra-band UL CA. At least one SRS from among those SRSs uses more than four ports (or eight ports).
-- Component:
   --- 1. The support for the transmission of the SRS for the antenna switching and the SRS for the antenna switching on different CCs in the symbol overlapping it in the intra-band UL CA. At least one SRS from among those SRSs uses more than four ports (or eight ports).
   -- Prerequisite FG: 40-5-6 or 40-5-7.
   -- Need for the gNB to know if that feature is supported: Yes
   -- Type: for each band.
   -- Mandatory/optional: the optional feature involving the capability signaling.

- The new FG for FG22-5d may be defined by at least one of the following several items.

-- Feature: 40.NR_MIMO_evo_DL_UL.
-- Index: 40-5-12.
-- FG: the simultaneous transmission of the SRS for the antenna switching and the SRS for the antenna switching in the inter-band UL CA. At least one SRS from among those SRSs uses more than four ports (or eight ports).
-- Component:
   --- 1. The support for the transmission of the SRS for the antenna switching and the SRS for the antenna switching on different CCs in the symbol overlapping it in the inter-band UL CA. At least one SRS from among those SRSs uses more than four ports (or eight ports).
   -- Prerequisite FG: 40-5-6 or 40-5-7.
   -- Need for the gNB to know if that feature is supported: Yes
   -- Type: for each BC.
   -- Mandatory/optional: the optional feature involving the capability signaling.

### <<<Example of the new FG for FG22-8, 22-8a, 22-8b and 22-8c>>>

- The new FG for FG22-8 may be defined by at least one of the following several items.

-- Feature: 40.NR_MIMO_evo_DL_UL.
-- Index: 40-5-13.
-- FG: the eight-port SRS for the CB PUSCH and the antenna switching on FR1 involving the symbol-level offset for the AP-SRS transmission.
-- Component: the need for the offset of 19 (or another value) symbols at minimum between the triggering and the transmission of the AP-SRS for the UE in the eight-port SRS for the CB PUSCH and the antenna switching on FR1.
-- Prerequisite FG: 40-5-4, 40-5-4a, 40-5-6 or 40-5-7.
-- Need for the gNB to know if that feature is supported: Yes
-- Type: for each FS.
-- Mandatory/optional: the optional feature involving the capability signaling.

- The new FG for FG22-8a may be defined by at least one of the following several items.

-- Feature: 40.NR_MIMO_evo_DL_UL.
-- Index: 40-5-14.
-- FG: the timeline with constraints for the PDCCH monitoring on an arbitrary span of up to three consecutive OFDM symbols in one slot and the eight-port SRS for the CB PUSCH and the antenna switching on FR1.
-- Component: the need for the offset of 19 (or another value) symbols at minimum between the triggering and the transmission of the AP-SRS for the UE in the eight-port SRS for the CB PUSCH and the antenna switching on FR1.
-- Prerequisite FG: 40-5-4, 40-5-4a, 40-5-6 or 40-5-7.
-- Need for the gNB to know if that feature is supported: Yes
-- Type: for each FS.
-- Mandatory/optional: the optional feature involving the capability signaling.

- The new FG for FG22-8b may be defined by at least one of the following several items.

-- Feature: 40.NR_MIMO_evo_DL_UL.
-- Index: 40-5-15.
-- FG: the monitoring occasion to be able to be an arbitrary OFDM symbol in one slot for case 2 for the type 1 common search space (CSS) involving the individual RRC configuration, the type 3 CSS and the UE-specific search space (UE-SS), and the timeline with constraints for the eight-port SRS for the CB PUSCH and the antenna switching on FR1.
-- Component: the need for the offset of 19 symbols at minimum between the triggering and the transmission of the AP-SRS for the UE in the eight-port SRS for the CB PUSCH and the antenna switching on FR1.
-- Prerequisite FG: 40-5-4, 40-5-4a, 40-5-6 or 40-5-7.
-- Need for the gNB to know if that feature is supported: Yes
-- Type: for each FS.
-- Mandatory/optional: the optional feature involving the capability signaling.

- The new FG for FG22-8c may be defined by at least one of the following several items.

-- Feature: 40.NR_MIMO_evo_DL_UL.
-- Index: 40-5-16.
-- FG: the monitoring occasion to be able to be an arbitrary OFDM symbol in one slot for case 2 involving the DCI gap for the type 1 CSS involving the individual RRC configuration, the type 3 CSS and the UE-SS, and the timeline with constraints for the eight-port SRS for the CB PUSCH and the antenna switching on FR1.
-- Component: the need for the offset of 19 (or another value) symbols at minimum between the triggering and the transmission of the AP-SRS for the UE in the eight-port SRS for the CB PUSCH and the antenna switching on FR1.
-- Prerequisite FG: 40-5-4, 40-5-4a, 40-5-6 or 40-5-7.
-- Need for the gNB to know if that feature is supported: Yes
-- Type: for each FS.
-- Mandatory/optional: the optional feature involving the capability signaling.

### <<<Example of the new FG for FG23-8-3 and 23-8-4>>>

- The new FG for FG23-8-3 may be defined by at least one of the following several items.

-- Feature: 40.NR_MIMO_evo_DL_UL.
-- Index: 40-5-17.
-- FG: the SRS antenna switching for the 8T8R.
-- Component:
   --- 1. The support for an SRS antenna switching 8T8R.
   --- 2. The reporting of the entry no. of the bands listed first involving the UL in the band combination that impacts this DL.
   --- 3. The reporting of the entry no. of the bands listed first involving this UL in the band combination that switches together with the UL.
   -- Prerequisite FG: 40-5-4 or 40-5-6.
   -- Need for the gNB to know if that feature is supported: Yes
   -- Consequence if that FG is not supported by the UE: the SRS antenna switching for the 8T8R is not supported.
   -- Type: for each FS.
   -- Notes:
      --- Candidate value for component 2: {1 through 32}.
      --- Candidate value for component 3: {1 through 32}.
      --- Components 2 and 3 are optional. If components 2 and 3 are reported, the values to be reported for components 2 and 3 are invalid for the same value of the xTyR in component 1 to be reported using the Rel-15/16 UE capability reporting.
      -- Mandatory/optional: the optional feature involving the capability signaling.

- The new FG for FG23-8-4 may be defined by at least one of the following several items.

-- Feature: 40.NR_MIMO_evo_DL_UL.
-- Index: 40-5-18.
-- FG: up to two SP-SRS sets and one P-SRS set for the antenna switching for the 8T8R.
-- Component:
   --- The support for up to two SP-SRS resource sets and one P-SRS resource set for the antenna switching for the 8T8R.
   -- Prerequisite FG: 40-5-4 or 40-5-6.
   -- Need for the gNB to know if that feature is supported: Yes
   -- Consequence if that FG is not supported by the UE: up to two SP-SRS resource sets and one P-SRS resource set for the antenna switching are not supported for the 8T8R.
   -- Type: for each FS.
   -- Mandatory/optional: the optional feature involving the capability signaling.

### <<<Another example of the new FG for FG2-58 and 22-8>>>

One new FG may be defined for the reporting of the minimum offset required between the triggering and the transmission of the AP-SRS for FG2-58 and 22-8.
- The new FG for FG2-58 and 22-8 may be defined by at least one of the following several items.

-- Feature: 40.NR_MIMO_evo_DL_UL.
-- Index: 40-5-8.
-- FG: the minimum symbol-level offset for the AP-SRS transmission in the eight-port SRS for the CB PUSCH and the antenna switching on FR1.
-- Component: the need for X symbol offsets at minimum between the triggering and the transmission of the AP-SRS for the UE in the eight-port SRS for the CB PUSCH and the antenna switching on FR1.
-- Prerequisite FG: 40-5-4, 40-5-4a, 40-5-6 or 40-5-7.
-- Need for the gNB to know if that feature is supported: Yes
-- Type: for each FS.
-- Notes:
   --- Candidate value for the X: {0, 19, another value, and the like}.
   -- Mandatory/optional: the optional feature involving the capability signaling.

In the present disclosure, the index of the new FG may be another value.

According to the present embodiment, the UE can properly report the capability regarding the SRS using more than four ports.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling. The specific condition may indicate at least one of the following:
- at least one of the embodiments above being configured to be enabled.

At least one of the above-described embodiments may be applied only to one of the following several SRSs.
- SRS using more than four ports.
- SRS using more than four ports that are to be TDMed.
- SRS using more than four ports that are not to be TDMed.
- SRS with a specific time-domain operation (for example, AP/SP/P).
- SRS with a specific usage (for example, CB/NCB/antenna switching/beam management).

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the embodiments above.
- supporting of an FG in at least one of the embodiments above.
- supporting of one or more components in an FG in at least one of the embodiments above.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- information indicating that the operation of the embodiment(s) above is enabled/disabled.
- RRC parameter for a specific release (for example, Rel. 18/19). In Rel. YY (for example, YY is 18 or larger), an RRC parameter that enables operation XXX may be expressed as XXX_rYY (XXX-rYY).

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including:
a transmitting section that transmits capability information indicating a support for a second feature group with a support for a first feature group for an SRS using more than four transmission ports as a prerequisite;
a receiving section that receives a configuration of the SRS; and
a control section that controls a transmission of the SRS, based on the configuration.

### {Supplementary Note 2}

The terminal according to supplementary note 1, wherein the second feature group is applied to one of an SRS using a specific combination of the number of transmission ports and the number of antennas, an SRS using a combination of eight transmission ports and eight antennas, and an SRS using four or fewer transmission ports and an SRS using more than four transmission ports.

### {Supplementary Note 3}

The terminal according to supplementary note 1 or 2, wherein the second feature group indicates one of an offset between a triggering and a transmission of an aperiodic SRS, a support for a simultaneous transmission of an SRS on a plurality of component carriers, and a support for an antenna switching.

### {Supplementary Note 4}

The terminal according to any one of supplementary notes 1 to 3, wherein the first feature group indicates one of an SRS for an antenna switching using eight ports that are not to be time-division multiplexed (TDMed), an SRS for a codebook using eight ports that are not to be TDMed, an SRS for an antenna switching using eight ports that are to be TDMed, and an SRS for a codebook using eight ports that are to be TDMed.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

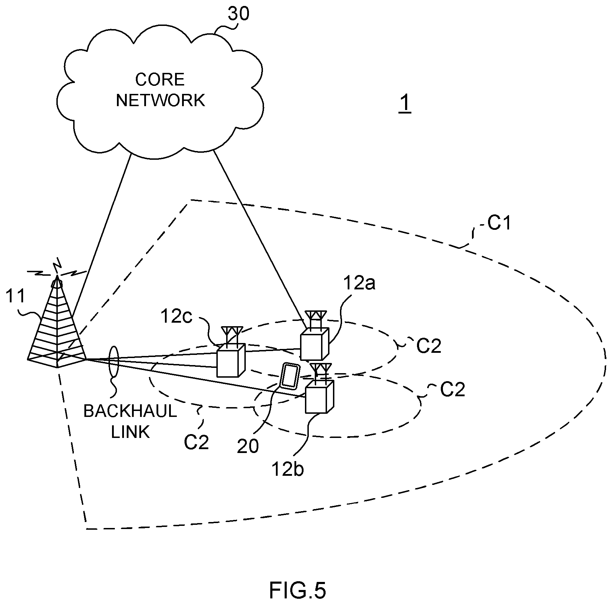

FIG. 5 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

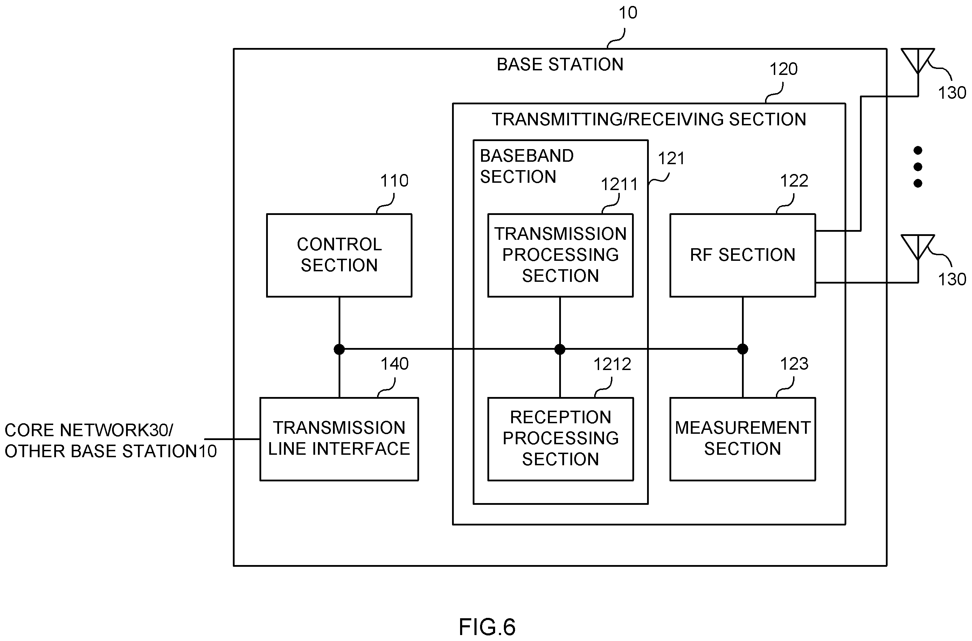

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the

### transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive capability information indicating a support for a second feature group with a support for a first feature group for an SRS using more than four transmission ports as a prerequisite. The transmitting/receiving section 120 may transmit a configuration of the SRS. The control section 110 may control a reception of the SRS, based on the configuration.

### (User Terminal)

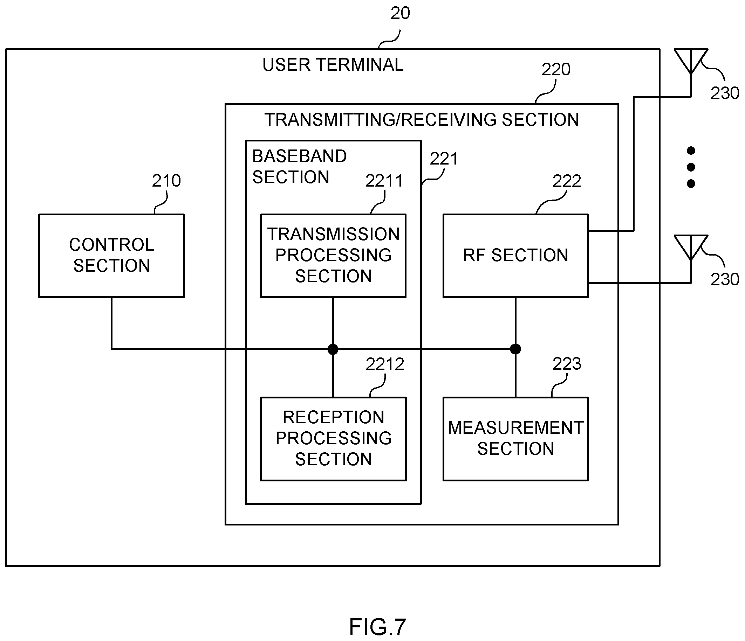

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the

### transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may transmit capability information indicating a support for a second feature group (for example, a new FG) with a support for a first feature group (for example, a prerequisite FG) for an SRS using more than four transmission ports as a prerequisite. The transmitting/receiving section 220 may receive a configuration of the SRS. The control section 210 may control a transmission of the SRS, based on the configuration.

The second feature group may be applied to one of an SRS using a specific combination of the number of transmission ports and the number of antennas, an SRS using a combination of eight transmission ports and eight antennas, and an SRS using four or fewer transmission ports and an SRS using more than four transmission ports.

The second feature group may indicate one of an offset between a triggering and a transmission of an aperiodic SRS, a support for a simultaneous transmission of an SRS on a plurality of component carriers, and a support for an antenna switching.

The first feature group may indicate one of an SRS for an antenna switching using eight ports that are not to be time-division multiplexed (TDMed), an SRS for a codebook using eight ports that are not to be TDMed, an SRS for an antenna switching using eight ports that are to be TDMed, and an SRS for a codebook using eight ports that are to be TDMed.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

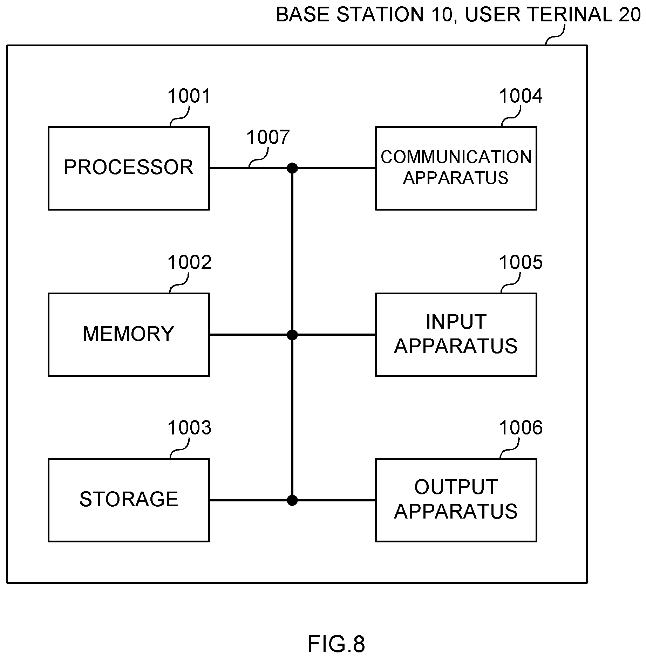

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names assigned to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

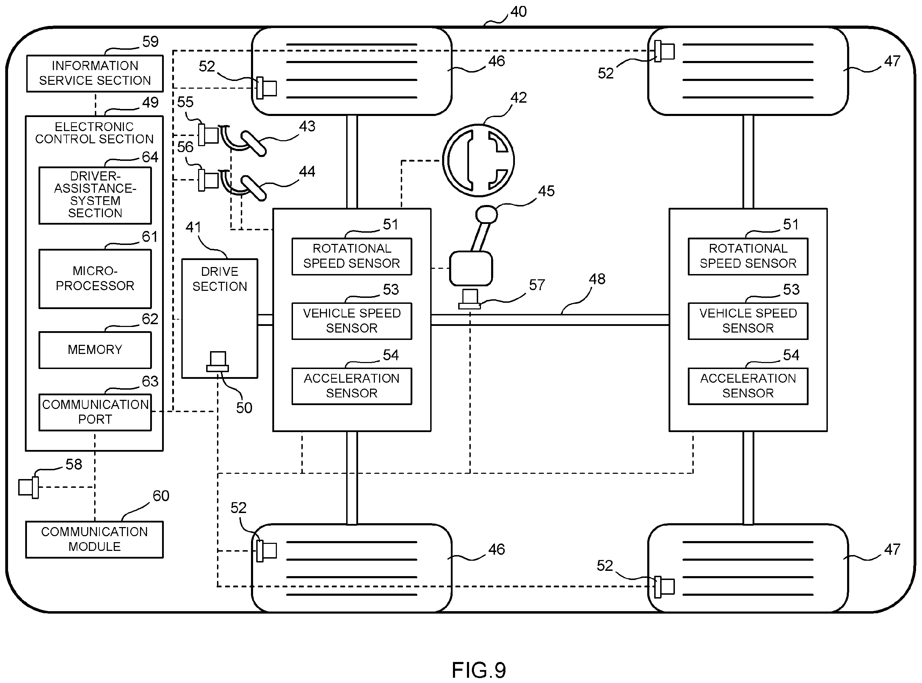

FIG. 9 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various information such as driving information, traffic information, and entertainment information, such as a car navigation system, an audio system, a speaker, a display, a television, and a radio; and one or more ECUs that control these devices. The information service section 59 provides various information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a transmitting section that transmits capability information indicating a support for a second feature group with a support for a first feature group for an SRS using more than four transmission ports as a prerequisite;
a receiving section that receives a configuration of the SRS; and
a control section that controls a transmission of the SRS, based on the configuration.

2. The terminal according to claim 1, wherein
the second feature group is applied to one of an SRS using a specific combination of the number of transmission ports and the number of antennas, an SRS using a combination of eight transmission ports and eight antennas, and an SRS using four or fewer transmission ports and an SRS using more than four transmission ports.

3. The terminal according to claim 1, wherein
the second feature group indicates one of an offset between a triggering and a transmission of an aperiodic SRS, a support for a simultaneous transmission of an SRS on a plurality of component carriers, and a support for an antenna switching.

4. The terminal according to claim 1, wherein
the first feature group indicates one of an SRS for an antenna switching using eight ports that are not to be time-division multiplexed (TDMed), an SRS for a codebook using eight ports that are not to be TDMed, an SRS for an antenna switching using eight ports that are to be TDMed, and an SRS for a codebook using eight ports that are to be TDMed.

5. A radio communication method for a terminal, the radio communication method comprising:
transmitting capability information indicating a support for a second feature group with a support for a first feature group for an SRS using more than four transmission ports as a prerequisite;
receiving a configuration of the SRS; and
controlling a transmission of the SRS, based on the configuration.

6. A base station comprising:
a receiving section that receives capability information indicating a support for a second feature group with a support for a first feature group for an SRS using more than four transmission ports as a prerequisite;
a transmitting section that transmits a configuration of the SRS; and
a control section that controls a reception of the SRS, based on the configuration.
